# EUROPEAN PATENT APPLICATION

(11) **EP 2 759 321 A2**
(43) Date of publication of application: **30.07.2014**
(21) Application number: 12839811.2
(22) Date of filing: 11.10.2012
(51) Int. Cl.: A63F 5/04, G02F 1/1347, G02F 1/1335

(54) **DISPLAY DEVICE, AND GAME CONSOLE INCLUDING SAME**

(30) Priority: 14.10.2011 KR 20110105043
(71) Applicant: Tovis Co., Ltd., Yeonsu-gu, Incheon 406-840 (KR)
(72) Inventor: KIM, Yong-Beom, Incheon 406-840 (KR); KIM, Yang-Rae, Incheon 406-840 (KR)
(74) Representative: Manitz, Finsterwald & Partner GbR
(86) International application number: PCT/KR2012/008226
(87) International publication number: WO 2013/055110

(57) **Abstract**

A display device includes: a first liquid crystal display device; a second liquid crystal display device which is disposed behind the first liquid crystal display device to be overlapped in a forward/rearward direction; and a light diffusion plate which is disposed between the first and second liquid crystal display devices. The first liquid crystal display device includes: a liquid crystal panel; a color filter plate which is disposed in front of the liquid crystal panel, a predetermined region of the color filter plate being removed; a polarizer plate which is disposed at a front and/or a rear of the liquid crystal panel; and a light source which is disposed behind the liquid crystal panel. The light diffusion plate is disposed between the first liquid crystal display device and the second liquid crystal display device to be overlapped with an area including the predetermined region in a forward/rearward direction.

## Description

Display device, and game console including same

### [Field of the Invention]

The present invention relates to a display device and a game console including the same.

### [Background Art]

A technology of arranging two liquid crystal display devices to be overlapped with one another in a forward/rearward direction to realize a multi-layered image display device has been introduced.

Since in the prior art the two liquid crystal display devices are simply disposed in a forward/rearward direction and an images is selectively displayed on one of the two devices, the use is limited and the structure is complicated.

### [Detailed Description of the Invention]

### [Technical Problem]

The present invention has been made in an effort to solve the above-mentioned problem and to provide a display device which is formed such that the rear can be seen through a predetermined region, and a display device which is formed by disposing two liquid crystal display devices to be overlapped with one another in a forward/rearward direction and the rear liquid crystal display device can be seen from the front through a predetermined region, and a game console using the same.

### [Technical Solution]

A display device according to an exemplary embodiment of the present invention includes: a first liquid crystal display device; a second liquid crystal display device which is disposed behind the first liquid crystal display device to be overlapped in a forward/rearward direction; and a light diffusion plate which is disposed between the first liquid crystal display device and the second liquid crystal display device. The first liquid crystal display device includes: a liquid crystal panel; a color filter plate which is disposed in front of the liquid crystal panel, a predetermined region of the color filter plate being removed; a polarizer plate which is disposed at a front and/or a rear of the liquid crystal panel; and a light source which is disposed behind the liquid crystal panel. The light diffusion plate is disposed between the first liquid crystal display device and the second liquid crystal display device to be overlapped with an area including the predetermined region in a forward/rearward direction.

The light diffusion plate may have the same size and shape with the predetermined region.

A region of the polarizer plate corresponding to the predetermined region may be removed.

The second liquid crystal display device may have a curved surface shape.

A game console according to an exemplary embodiment of the present invention includes: a first liquid crystal display device; and at least one reel which is disposed behind the first liquid crystal display device and on which a plurality of symbols are displayed. The first liquid crystal display device includes: a liquid crystal panel; a color filter plate which is disposed in front of the first liquid crystal display panel, a predetermined region of the color filter plate corresponding an area where the symbol of the reel is selected being removed; a polarizer plate which is disposed at a front and/or a rear of the first liquid crystal display panel; and a light source which is disposed behind the first liquid crystal display panel.

The game console may further include a light diffusion plate which is disposed between the first liquid crystal display device and the reel. The reel may be realized as a second liquid crystal display panel, and the light diffusion plate may be disposed between the first liquid crystal display panel and the second liquid crystal display panel to be overlapped with an area including the predetermined region in a forward/rearward direction.

The light diffusion plate may have the same size and shape with the predetermined region.

An area of the polarizer plate corresponding to the predetermined region may be removed.

A display device according to an embodiment of the present invention includes: a liquid crystal panel; a color filter plate which is disposed in front of the liquid panel, a predetermined region of the color filter being removed; a polarizer which is disposed at a front and/or a rear of the liquid crystal panel; and a light source which is disposed behind the liquid crystal panel.

An area of the polarizer plate corresponding to the predetermined region may be removed.

### [Advantages Effects]

According to the present invention, since through holes are formed at predetermined regions of a color filter plate and a polarizer plate of a front liquid crystal display panel, an image display area of a rear liquid crystal display panel can be seen from the front through the through holes, and at the same, since a light diffusion plate is disposed at a region corresponding to the through hole, the generation of interference patterns can be prevented.

### [Brief Descriptions of Drawings]

FIG. 1 is a schematic perspective view of a display device according to an embodiment of the present invention.
FIG. 2 is a sectional view taken along a line II - II in FIG. 1.
FIG. 3 is a schematic perspective view of a display device according to another embodiment of the present invention.

### [Detailed Description of the Embodiments]

Embodiments of the present invention will be described in detail hereinafter with reference to the accompanying drawings.

A display device according to an embodiment of the present invention will be used as an ordinary display device or as a display of a game console or the like.

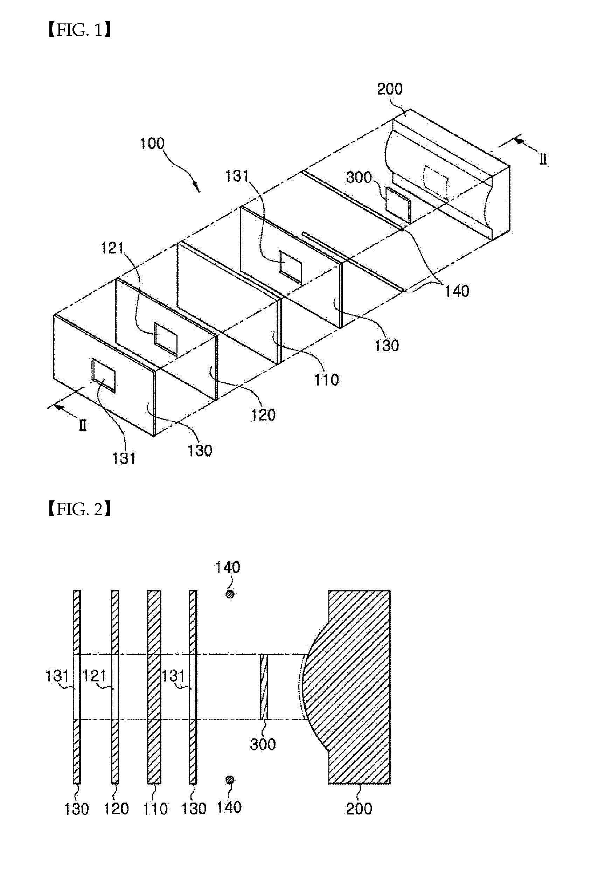

Referring to FIG. 1 to FIG. 3, a display device according to an embodiment of the present invention includes a liquid crystal panel 110. A color filter plate 120 may be disposed in front of the liquid crystal panel 110, and a polarizer plate 130 may be disposed in front of and/or behind of the liquid crystal panel 110. At this time, a predetermined region of the color filter plate 120 is removed to form a through hole 121, the space behind the liquid crystal panel 110 can be seen through the through hole 121 from the front of the liquid crystal panel 110. Correspondingly, a predetermined region of the polarizer plate 130 is also removed to form a thorough hole 131.

Meanwhile, a display device according to another embodiment of the present invention includes a liquid crystal display device which is disposed behind the display device according to the above-described embodiment of the present invention, and a game console according to an embodiment of the present invention includes a reel of a game console which is disposed behind the display device according to the above-described embodiment of the present invention.

Hereinafter, referring to the accompanying drawings, a display device including two liquid crystal display devices which are disposed in a forward/reward direction and a game console (e.g., game machine) including a liquid crystal display device and a reel which is disposed behind the same will be described. Explanation for an embodiment including one liquid crystal display device may be included to these embodiments, so explanation for the same will be omitted.

Referring to FIG. 1 and FIG. 2, a display device according to an embodiment of the present invention includes a first liquid crystal display device 100 and a second liquid crystal display device 200 which are disposed in a forward/rearward direction.

The second liquid crystal display device 200 is disposed behind the first liquid crystal display device 100, and the second liquid crystal display device 200 is disposed to be overlapped with the first liquid crystal display device 100 in a forward/rearward direction. That is, being seen from the front, an image display area of the first liquid crystal display device 100 and an image display area of the second liquid crystal display device 200 are disposed to be overlapped with one another.

The first and the second liquid crystal display devices 100 and 200 may be realized by a display device including a conventional liquid crystal panel which can display images using alignment of liquid crystal, and may include various driving circuits for driving the liquid crystal panel.

A light diffusion plate 300 is disposed between the first liquid crystal display device 100 and the second liquid crystal display device 200. The light diffusion plate 300 is disposed between the first liquid crystal display device 100 and the second liquid crystal display device 200 so as to be overlapped with the above-described predetermined region in a forward/rearward direction.

The light diffusion plate 300 may be formed of any material which has function of diffusion light. Since the light diffusion plate 300 is disposed between the two liquid crystal display devices 100 and 200, generation of interference pattern (Moire phenomenon) due to overlapping of patterns of liquid crystal cells of the liquid crystal panels of the two liquid crystal display devices 100 and 200 can be prevented.

Referring to FIG. 1 and FIG. 2, the first liquid crystal display device 100 includes a first liquid crystal panel 110.

The liquid crystal panel 110 may be a conventional transparent liquid crystal panel, and for example may be formed by sealing liquid crystal in a space formed between transparent substrates facing each other such as glass substrates on which a thin film transistor layer is formed.

The color filter plate 120 is disposed at the front of the liquid crystal panel 110. Light having passed through the liquid crystal panel 110 passes the color filter plate 120 and specific color is realized during this process. At this time, as shown in the drawing, the predetermined region of the color filter plate 120 is removed to form the through hole 121.

Meanwhile, the polarizer plate 130 may be disposed at the front and/or the rear of the liquid crystal panel 110. Although the polarizer plates 130 are disposed on both the front and the rear of the liquid crystal panel 110 in the drawing, the polarizer 130 may be disposed at only one of the front and the rear of the liquid crystal panel 110. At this time, the polarizer plate 130 which is disposed at the front of the liquid crystal panel 110 may be disposed in front of the color filter plate 120 as shown in the drawing.

At this time, the polarizer plate 130 may have a shape which covers an area corresponding to the entire portion of the liquid crystal panel 110, and a region corresponding to the predetermined region of the color filter plate 120 may be removed to form a through hole 131. That is, the through hole 131 of the polarizer plate 130 and the through hole 121 of the color filter plate 120 are formed so as to have the same size and shape and to be overlapped with one another in a forward/rearward direction. Accordingly, being seen from the front, an image display area of the second display device 200 which is located behind the transparent liquid crystal panel 110 can be seen through the through hole 131 of the polarizer plate 130 and the through hole 121 of the color filter plate 120. In case of allowing the image display area of the second display device 200 to be seen from the front, the liquid crystal panel is controlled to be in a normally white state so as to be transparent, so that the image display area of the second display device 200 can be seen from the front therethrough. That is, in case of allowing the display area of the second display device 200 which is disposed at the rear to be seen from the front, a region among an image display area of the liquid crystal panel 110 corresponding to the predetermined region is controlled to be a normally white state so as to be transparent and a corresponding region of the second liquid crystal display device 200 is controlled to display an image, so that the image displayed on the second liquid crystal display device 200 can be seen through the light diffusion plate 300 from the front. At this time, the remained region of the liquid crystal panel 110 can be controlled to display images. Accordingly, in a state that an image is being displayed on a partial area of the first liquid crystal display device 100, an image displayed on the second liquid crystal display device 200 which is disposed at the rear can be seen from the front.

Meanwhile, the light diffusion plate 300 may be formed to have the same size and shape with the above-mentioned predetermined region corresponding to the through hole 121 of the color filter plate 120 and the through hole 131 of the polarizer plate 130. Accordingly, the light diffusion plate 300 covers only a region which can be seen from the front through the through hole 121 of the color filter plate 120 and the through hole 131 of the polarizer plate 130, so good light characteristics can be obtained while preventing the generation of interference patterns at a region among the overlapped regions of the first and the second liquid display devices 100 and 200 which can be seen from the front.

A light source 140 may be provided at the rear of the liquid crystal panel 110. The light source 140 plays a role of a backlight of the first liquid crystal display device 100, and may be fixed at a specific position by a frame, and the number and the position of the light source 140 can be varied. In addition, the light source 140 may be any device such as a cathode ray lamp or an LED lamp which can emit light.

Meanwhile, as shown in the drawing, the second liquid crystal display device 200 may have a curved-surface shape. For example, a front surface of an image display area of the second liquid crystal display device 200 may have a curved shape of being convex toward the front. The second liquid crystal display device 200 having a curved shape may be realized a flexible liquid crystal display device or may be formed by paring outer surfaces of substrates of a flat liquid crystal display and bending the same. In case that the second liquid crystal display device 200 which is disposed at the rear has a curved shape and symbols which are used in a slot machine game are displayed thereon, the display device according to an embodiment of the present invention can be used as a device including a reel and a display screen of a slot machine.

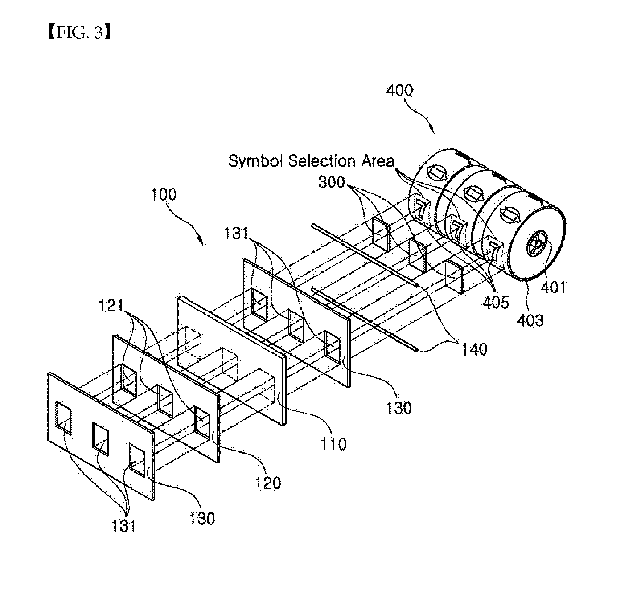

FIG. 3 is a drawing schematically showing a game console according to an embodiment of the present invention.

Although only a liquid crystal display device 100 and a reel 400 disposed behind the same are shown in the drawing, a game console may further include a housing (not shown) of a type of a cabinet in which the liquid crystal display device 100 and the reel 400 are mounted, various parts for performing a game, a controller, and so on.

The liquid crystal display device 100 may be the same with the above-described first liquid crystal display device 100 according to an embodiment of the present invention, so explanation thereof will be omitted.

The reel 400 may be disposed inside a housing to be disposed behind the liquid crystal display device 100. The reel 400 may be a mechanical reel which is generally used in a conventional game console or may also be realized by a liquid crystal display.

In case of a mechanical reel, the reel 400 may be provided as a plural, the respective reel may be disposed adjacently in parallel state and may be formed to rotate independently. For example, the reel 400 may include a reel drum 401 and a reel strip 403 which is attached to an outer surface of the reel drum 401. And a motor (not shown) for rotating the reel drum 401 may be provided. The reel strip 403 may be made of translucent resin, and a plurality of symbols 405 may be displayed on the reel strip 403, and the respective symbol 405 may be equidistantly disposed with some interval therebetween. At this time, the symbol may be a number, a picture, a letter, etc. The respective reel 400 may rotate and stop at a state that one of the displayed symbols is located at a front center. Hereinafter, an imaginary area corresponding to a front center at which an area where the symbols 405 is displayed stops may be a symbol selection area.

At this time, a portion of the color filter plate 120 corresponding to the symbol selection area where the symbol is selected is removed. That is, referring to FIG. 3, the through hole 121 of the color filter plate 120 and the symbol selection area are overlapped with one another in a forward/rearward direction, and accordingly the symbol selection area and the selected symbol which is displayed on the same can be seen from the front through the through hole 121 of the color filter plate 120.

Meanwhile, the reel 400 may be realized as a liquid crystal display device, and in this case the light diffusion plate 300 may be disposed between the liquid crystal display device 100 and the reel (i.e., liquid crystal display device) 400. In case that the reel 400 is a mechanical reel which is generally used in a conventional game console rather than a liquid crystal display device, the light diffusion plate 300 may not be provided.

At this time, as shown in FIG. 3, the light diffusion plate 300 may be disposed between the two liquid crystal display devices to be overlapped with an area including the through hole 121 of the color filter plate 120 in a forward/rearward direction. The light diffusion plate 300 may have the same size and shape with the predetermined region (i.e., the through hole 121 of the color filter plate 120). Accordingly, in case of forming a game console by disposing two liquid crystal display devices in a forward/rearward direction, the symbol of the rear liquid crystal display device can be seen from the front and at the same time the generation of interference patters which may be caused by overlapping the two liquid crystal display device can be prevented.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a display device and a game console including the same which can be applied to various displays and game consoles, so has an industrial applicability.

## Claims

1. A display device comprising:
a first liquid crystal display device;
a second liquid crystal display device which is disposed behind the first liquid crystal display device to be overlapped in a forward/rearward direction; and
a light diffusion plate which is disposed between the first liquid crystal display device and the second liquid crystal display device,
wherein the first liquid crystal display device comprises:
a liquid crystal panel;
a color filter plate which is disposed in front of the liquid crystal panel, a predetermined region of the color filter plate being removed;
a polarizer plate which is disposed at a front and/or a rear of the liquid crystal panel; and
a light source which is disposed behind the liquid crystal panel,
and wherein the light diffusion plate is disposed between the first liquid crystal display device and the second liquid crystal display device to be overlapped with an area including the predetermined region in a forward/rearward direction.

2. The display device of claim 1, wherein the light diffusion plate has the same size and shape with the predetermined region.

3. The display device of claim 1, wherein a region of the polarizer plate corresponding to the predetermined region is removed.

4. The display device of claim 1, wherein the second liquid crystal display device has a curved surface shape.

5. A game console comprising:
a first liquid crystal display device; and
at least one reel which is disposed behind the first liquid crystal display device and on which a plurality of symbols are displayed,
wherein the first liquid crystal display device comprises:
a liquid crystal panel;
a color filter plate which is disposed in front of the first liquid crystal display panel, a predetermined region of the color filter plate corresponding an area where the symbol of the reel is selected being removed;
a polarizer plate which is disposed at a front and/or a rear of the first liquid crystal display panel; and
a light source which is disposed behind the first liquid crystal display panel.

6. The game console of claim 5, further comprising a light diffusion plate which is disposed between the first liquid crystal display device and the reel,
wherein the reel is realized as a second liquid crystal display panel,
and wherein the light diffusion plate is disposed between the first liquid crystal display panel and the second liquid crystal display panel to be overlapped with an area including the predetermined region in a forward/rearward direction.

7. The game console of claim 6, wherein the light diffusion plate has the same size and shape with the predetermined region.

8. The game console of claim 5, wherein an area of the polarizer plate corresponding to the predetermined region is removed.

9. A display device comprising:
a liquid crystal panel;
a color filter plate which is disposed in front of the liquid panel, a predetermined region of the color filter being removed;
a polarizer which is disposed at a front and/or a rear of the liquid crystal panel; and
a light source which is disposed behind the liquid crystal panel.

10. The display device of claim 9, wherein an area of the polarizer plate corresponding to the predetermined region is removed.
